Europäisches Patentamt

European Patent Office

Office européen des brevets

(19)

(11) **EP 1 284 106 A2**

(12) **EUROPEAN PATENT APPLICATION**

(43) Date of publication:
**19.02.2003 Bulletin 2003/08**

(51) Int Cl.⁷: $A23P\ 1/16$, $A23C\ 9/13$, $A23C\ 9/152$, $A23C\ 9/123$

(21) Application number: **02078238.9**

(22) Date of filing: **06.08.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **16.08.2001 NL 1018770**

(71) Applicant: **Campina B.V.**
**5301 LB Zaltbommel (NL)**

(72) Inventors:
• **Kloek, William**
**5467 BR Veghel (NL)**
• **Somers, Marco, Albertus, Franciscus, Johannus**
**5037 DJ Tilburg (NL)**
• **Knip, Jacob**
**3445 DB Woerden (NL)**

(74) Representative: **Mertens, Hans Victor**
**van Exter Polak & Charlouis B.V.,**
**P.O. Box 3241**
**2280 GE Rijswijk (NL)**

(54) **Method for preparing an edible stable foam, foam and foodstuff wich comprises the foam**

(57)     The present invention relates to a method for preparing an edible stable foam, in which:

(a) a foam is prepared from a starting material which comprises a protein; then
(b) the protein in the foam is denatured by pH-induced denaturation in such a manner that surface denaturation of the protein takes place, and the stability of the foam is increased.

The invention also relates to a foam which is obtained using the method and to a foodstuff into which the foam is mixed.

**EP 1 284 106 A2**

Printed by Jouve, 75001 PARIS (FR)

**Description**

The present invention relates to a method for preparing an edible stable foam.

Various methods for preparing edible foam products are known in practice. For example, there are numerous food products with an aerated foam structure, such as for example puddings of the bavarois type, mousses, whipped cream, etc. Edible products which contain air bubbles are described, inter alia, in EP-A 0 777 969 and WO-A 00/38547. The air bubbles which are present in these aerated food products place high demands on the matrix which surrounds the air bubbles. This is because the food product as a whole has to be stable with regard to bubble size, overrun and the formation of whey. To obtain a stable aerated product, which is one of the most important requirements for industrial production of these products, the matrix material is normally gelated (for example in bavarois desserts) or set (for example in hard protein foam products).

US-A-5,925,394 describes the whipping of an egg or milk product, the whipping taking place at the same time as the denaturation of the product. Flavour differences may easily occur with a method of this type.

DE 19654625 describes a method and device for producing a foamed, rich dairy product in which whipping cream is whipped and added to yoghurt. The foam structure obtained is stabilized by the presence of a high percentage of fat.

FR 2 461 461 and GB 1 358 484 relate to a method for preparing whipped dairy products, in which the foam structure obtained is stabilized by coagulation with rennet.

FR 2 243 163 relates to a whipped dessert product in which stabilization is achieved by storing the product at a temperature below 0°C.

GB 1 422 792, EP-A 0 339 784 and the earlier filed but non-prepublished EP-A 1 166 655, describe aerated dairy products, in which the aerated structure obtained is stabilized by heating in the packaging.

US-A-4,312,891 relates to a dessert product with a reversible gel structure.

A drawback of the known methods for preparing a stable foam is that it is often very difficult to obtain a foam which is stable for a prolonged time while its lightness and organoleptic properties are retained.

A further drawback of the known methods for preparing a stable foam product is that many foam products are based on fat and emulsifiers. This runs contrary to the consumer's wishes, which are in fact for low-fat or even fat-free products.

Furthermore, there is an increase in consumer demand for natural food products, i.e. food products to which the minimum possible amount of artificial substances which are not naturally part of the product have been added.

The object of the present invention is to avoid the abovementioned and further drawbacks and to satisfy the abovementioned demand.

A particular object according to the invention is to provide a method for preparing a stable, low-fat foam product to which the minimum possible level of artificial additives have been added.

These and other objects are achieved, according to the present invention, by providing a method for preparing an edible stable foam, in which:

(a) a foam is prepared from a starting material which comprises a protein; then
(b) the protein in the foam is modified by pH-induced denaturation in such a manner that surface denaturation of the protein takes place, and the stability of the foam is increased.

Surprisingly, it has been found that with the method according to the invention it is possible to make a stable, low-fat, acidic, pourable foam - and a foodstuff of which the foam forms part - which does not contain any E numbers. A particular aspect of the method according to the invention is that it is possible to obtain small stable air bubbles for example in an acidic medium, which in the prior art is considered to be a problem if thickeners are not to be used. According to the invention, the term "pourable" is intended to mean that, if the packaging is held at an angle with the pouring opening horizontal or directed downwards, the foam or foodstuff into which it has been mixed can be poured without difficulty into a dish, etc.

In this context, it should be noted that the abovementioned European patent application EP-A 0 777 969 describes a stable, acidic, pourable product with a gas bubble content which is such that an overrun of at least 25% is obtained. For this purpose, a thickening system which comprises modified starch is used to stabilize the gas bubbles.

Surprisingly, it has been found that, since the denaturation of the protein in the foam only takes place after whipping, favourable organoleptic properties are obtained. A further advantage of whipping the foam first and then denaturing it is that the preparation of a foam in an efficient way with small air bubbles can be carried out on an industrial scale.

According to the invention, the term "stable foam" or "stable foam product" is intended to mean a foam or foam product in which the mean size of the gas bubbles remains less than 100 μm, preferably less than 50 μm, for at least one week, more preferably at least two weeks.

According to the invention, the term "preparing a foam from a starting material" is understood as meaning any suitable method allowing the protein in the starting material to be made into a foam. In general, this is achieved by whipping the protein or a suitable solution thereof. The starting material preferably comprises > 50%, more preferably > 70%, even more preferably > 90% of protein, based on dry matter.

During the preparation of the foam, in particular the whipping, the viscosity of the starting material plays a role. If the viscosity of the starting material is too low, for example in the case of a protein solution which is to be whipped, the air bubbles remain too large and moreover the foam drains away. An excessively high protein solution viscosity makes the solution difficult to whip, but the air bubbles are sufficiently small. The person skilled in the art will know how to select an appropriate viscosity as a function of temperature, percentage of protein in the protein solution (or other starting material) and the whipping apparatus. It has been found that good results can be obtained with a starting material viscosity of between 0.3-0.5, preferably approx. 0.4 Pa·s at a shear rate of 1 s$^{-1}$.

Furthermore, it has proven favourable for the starting material to be low-fat, so that a low-fat foam product can be obtained. For this purpose, the fat percentage is preferably < 20%, more preferably < 10%, even more preferably < 5%, most preferably approx. 0%.

The starting material used for the preparation of a foam is preferably an aqueous protein solution. The person skilled in the art will understand that starting materials other than protein alone may also be present in the solution.

According to the invention, the protein is modified by "pH-induced denaturation" (i.e. the protein is denatured by changing the pH). For example, by using denaturation of a whipped aqueous protein solution, the protein, which is adsorbed at the air-water interface, can be denatured at least at its surface (loss of the tertiary structure of the protein), which leads to the formation of a robust, cohesive protein film around the gas bubbles, which prevents or delays an increase in size on the part of the gas bubbles over the course of time.

Surprisingly, it has been found that pH-induced denaturation of the protein foam ensures very effective and surprisingly simple denaturation of the protein, which is adsorbed at the air-water interface. This pH-induced denaturation may take place, for example, through the addition of a food acid or, in a simple and elegant way, as a result of the foam being mixed into an acidic, liquid foodstuff. This acidic foodstuff may be a foodstuff which is inherently acidic, for example fermented milk products, such as yoghurt or curd cheese (Dutch: "kwark"), or may be a foodstuff which has been acidified. If the right protein is selected, the pH-induced denaturation may also take place at neutral pH, for example in custard.

The person skilled in the art will understand that the pH which is to be used will depend on the protein which is to be denatured in the foam. The proteins are denatured, using pH-induced denaturation, by setting the pH to around the isoelectric pH of the protein.

Proteins which are suitable for pH-induced denaturation are all food-grade proteins which, through pH-induced denaturation, undergo a denaturation of the protein adsorbed at the interface which is such that a cohesive film of protein is obtained around the gas bubble. Suitable proteins which are denatured at isoelectric pH include casein, caseinates, wheat proteins, soya proteins and the like.

According to a preferred embodiment of the method according to the invention, the protein used is caseinate, in particular crosslinked caseinate. Crosslinking can be effected, for example, by heating or enzymatically with the aid of transglutaminase. The caseinate is preferably crosslinked using a method described in IKURA, K. et al. Agric. Biol. Chem. 44 (7) 1567-1573 (1980). It has been found that this crosslinked caseinate makes it possible to obtain very stable gas bubbles in the foam. Particularly good and surprising results are obtained with enzymatically crosslinked caseinates which increase the viscosity of a 1% caseinate solution by a factor of 1.5.

The person skilled in the art will understand that when the foam is mixed into the foodstuff, the viscosity has to be appropriate to obtain a good result. Moreover, when the foam is being mixed in, to achieve good results it is necessary to select mixing conditions which are such that the gas bubbles in the foam remain substantially undamaged.

Highly favourable results are achieved if, as has already been stated above, the foam is denatured by the foam being mixed into a liquid foodstuff. This makes it possible to obtain an aerated, pourable foodstuff.

The present invention also relates to a foam which can be obtained using the method according to the invention. The foam product according to the invention can be used as such but may also be used in combination with any desired additives. Particular taste sensations can be obtained by mixing the foam according to the present invention with another, generally liquid product.

According to a preferred embodiment of the foam product according to the invention, the product substantially has bubbles with a diameter of less than 100 µm, preferably 25-80 µm, more preferably 35-65 µm, most preferably 40-50 µm. In the present application, the bubble size is defined as the mean bubble size. The surface-average diameter ($d_{32}$) or Sauter diameter is as follows:

$$d_{32} = \frac{\sum_{i} n_i \cdot d_i^3}{\sum_{i} n_i \cdot d_i^2}$$

where $n_i$ is the number of bubbles in class $i$ and $d_i$ is the mean diameter in class $i$.

This imparts particular sensory properties, such as creamy taste, to the foam product.

Finally, the present invention relates to a foodstuff into which the foam product according to the invention is mixed. This makes it possible to obtain a surprisingly low-fat food product with a particularly creamy taste. The foodstuff is preferably pourable.

In the foodstuff according to the invention, the overrun does not represent a limiting factor; by way of example, hydrocolloids can be used to prevent the formation of whey in acidic milk products. However, the foodstuff preferably has an overrun of at most 20%, preferably 10-18%, most preferably approximately 15%. Moreover, the foam which is mixed into the foodstuff preferably substantially has bubbles with a diameter of less than 100 μm, with the result that formation of a film on the tongue, which is considered unpleasant, is avoided.

Particular sensory sensations are obtained if the foodstuff is yoghurt, the foodstuff has an overrun of 10-18% and the foam which is mixed in has bubbles with a diameter of between 40-50 μm. A further advantage of these small bubbles is that they will be blended into the product less quickly and that the foam can be mixed into the product without damaging the bubble. This results in a highly aerated foodstuff which is low-fat but nevertheless has a creamy taste.

According to the present invention, the term "overrun" is understood in the following way:

$$\text{Overrun} = [(m1 - m2)/m2] * 100\%$$

where

$m_1 =$　　mass of foodstuff of a known volume; and
$m_2 =$　　mass of aerated foodstuff of the same volume as $m_1$, i.e. into which the prepared foam product has been mixed.

In this context, it should be noted that the prepared foam itself may also have an overrun value. In this case the following apply:

　　$m_1$ = mass of protein of a known volume, from which foam is prepared
　　$m_2$ = mass of prepared foam of the same volume as $m_1$.

A similar definition of overrun is also given in the abovementioned European patent application EP-A 0 777 969 and is known to the person skilled in the art.

The person skilled in the art will understand that numerous variations to the above are possible. For example, various additives, for example natural additives, may be added to the foam or the foodstuff which includes the foam.

The invention will be explained below with reference to a nonlimiting example.

<u>Example 1</u> Sodium caseinate foam and yoghurt.

An aerated yoghurt product was prepared in the following way. 25 g of granulated sugar were dissolved in 475 g of water, giving a 5% sugar water solution. Then, 30 g of sodium caseinate (EM-7; DMV-international, Veghel, the Netherlands) were dissolved in 270 g of the 5% sugar water solution, which had been heated to 55°C. The solution was cooled to 20°C. 250 g of the sodium caseinate solution were whipped in a Ledoux beater (Ladoux bv., Dodewaard, the Netherlands) at a temperature of 20°C until the maximum level of whipping had been attained. The overrun of the foam was determined and was found to be 250%.

Then, 45 g of foam was added to 750 g of yoghurt (Melkunie - low-fat yoghurt), so that the overrun in the end product was 15%. The foam and the low-fat yoghurt were mixed in a Hobart planetary mixer which was fitted with a gate stirrer at setting 1 (60 rpm) so that a visually homogeneous product was obtained (first of all, stirring was carried out for 30 seconds, and then product was mixed in with the aid of a spatula, followed by stirring for a further 30 seconds).

The mixture of foam and yoghurt was introduced into a transparent cup made from polystyrene, and the bubble size distribution of the aerated product was determined. For this purpose, 1 ml of the aerated yoghurt and 10 ml of glycerol (99%, Merck) were carefully mixed. A sample of this suspension was placed onto a specimen slide which was covered with a glass cover. This sample was then assessed under a stereomicroscope (Jena, Germany) equipped with a digital camera (JVC-KY-F55BE), and then the bubble size distribution was automatically calculated with the aid of image-processing software (Leica).

The product had a very creamy taste without any formation of a film in the mouth being observed. The product had an overrun of 14.6% and bubbles substantially with a diameter of 40-50 μm.

Example 2 Effect of enzymatic crosslinking of caseinate on foam stability of caseinate foam which has been mixed into yoghurt. (Sodium caseinate versus enzymatically crosslinked sodium caseinate).

For the caseinate EM-7 solution, the same process as that described in Example 1 was followed. For the enzymatically crosslinked caseinate, the same process as for EM-7 was followed, using the same concentrations and temperatures.

The mean bubble size of the aerated yoghurts was measured as a function of time using Leica equipment (cf. Example 1). The mean bubble sizes are given in the table below.

| Storage time (days) | $d_{32}$ sodium caseinate (μm) | $d_{32}$ crosslinked caseinate (μm) |
|---|---|---|
| 0 | 54.1 | 43.8 |
| 1 | 56.2 | 43.8 |
| 2 | 70.9 | 45.1 |
| 6 | 79.1 | 40.9 |
| 8 | 72.8 | 43.0 |
| 14 | 62.3 | 41.5 |

The diameter immediately after mixing (0 days) shows that the bubble size of the foam of crosslinked caseinate was more stable and smaller than that of sodium caseinate.

The table shows that the crosslinked caseinate foam, mixed into yoghurt, is more stable over the course of time than caseinate foam, mixed into yoghurt, which increases in size to a greater extent over the course to time. In the latter case, the increase in bubble size is so great that the large bubbles disappear by merging into the cream, with the result that the mean bubble size decreases again somewhat.

Example 3 Mixing of an acidic denatured foam into a neutral product.

Foam was made as described in Example 2 (overrun = 250%). All the operations were carried out at room temperature. 150 g of foam were mixed into 150 g of low-fat yoghurt (Melkunie) with the aid of a Hobart planetary mixer at setting 1 (60 rpm) for 1 minute. The overrun of this acidified foam was 130%. 32.5 g of this foam were mixed with 250 g of vanilla custard (Melkunie) with the aid of a Hobart planetary mixer (setting 1; 1 minute). The result was a stable, aerated neutral product with an overrun of 15%.

**Claims**

1. Method for preparing an edible stable foam, in which:

   (a) a foam is prepared from a starting material which comprises a protein; then
   (b) the protein in the foam is modified by pH-induced denaturation in such a manner that surface denaturation of the protein takes place, and the stability of the foam is increased.

2. Method according to claim 1, **characterized in that** the starting material has a viscosity of 0.3-0.5 Pa·s, preferably approx. 0.4 Pa·s.

3. Method according to claim 1 or 2, **characterized in that** the starting material is low-fat, preferably with a fat percentage of < 20%, more preferably < 10%, even more preferably < 5%, most preferably approx. 0%.

4. Method according to one or more of the preceding claims, **characterized in that** the protein used is caseinate, in particular crosslinked caseinate.

5. Method according to one or more of the preceding claims, **characterized in that** the foam is denatured by mixing it into a liquid foodstuff, preferably yoghurt.

6. Foam which can be obtained using the method according to one or more of the preceding claims 1-5.

7. Foodstuff which can be obtained using the method according to claim 5.

8. Foodstuff according to claim 7, which has an overrun of at most 20%, preferably 10-18%, most preferably approx. 15%.

9. Foodstuff according to claims 7 or 8, in which the foam substantially comprises bubbles with a diameter of less than 100 µm, preferably 25-80 µm, more preferably 35-65, most preferably 40-50 µm.

10. Foodstuff according to claim 9, in which the foodstuff is an acidic dairy product, in particular yoghurt.

11. Foodstuff according to claim 10, in which the foodstuff is yoghurt, has an overrun of 10-18% and the foam product which is mixed in has bubbles which substantially have a diameter of 40-50 µm.

12. Foodstuff according to one or more of the preceding claims, which is pourable.